# EUROPEAN PATENT APPLICATION

(11) **EP 0 595 191 A1**
(43) Date of publication of application: **04.05.1994**
(21) Application number: 93117028.6
(22) Date of filing: 21.10.1993
(51) Int. Cl.: H02J 7/14

(54) **A voltage regulator for an electrical generator, particularly an alternator**

(30) Priority: 28.10.1992 IT TO920876
(71) Applicant: INDUSTRIE MAGNETI MARELLI S.p.A., I-20145 Milano (IT)
(72) Inventor: Fasola, Giancarlo, c/o IND. MAGNETI MARELLI S.p.A., I-20145 Milano (IT); Navarra, Pietro, I-20093 Cologno Monzese (Milano) (IT)
(74) Representative: Bosotti, Luciano

(57) **Abstract**

A voltage regulator for an alternator with excitation by permanent magnets (1) uses a supercapacitor (20) with a capacitance of the order of one farad and a static or mechanical switch (19) with a variable switching frequency of the order of tens of Hz. The device has the advantage that it is free of radio-frequency emissions and is also simpler, lighter and less bulky than voltage regulators formed according to the prior art.

## Description

The present invention relates to a voltage regulator usable in particular in association with an electrical generator in a vehicle having an internal combustion engine.

Typically, an electrical generator for vehicles is constituted by a synchronous, rotary electrical machine, normally an alternator, and by a multiphase rectifier bridge for outputting a direct electrical current.

The voltage-regulator circuits according to the prior art use conventional semiconductor circuits or switching regulator circuits such as, for example, that described in the present Applicant's European patent appln. No. 90830291.2 filed on 26th June 1990. This application describes a voltage-regulator circuit which uses a switching regulator with a working frequency of about 40 kHz, regulated by pulse-amplitude modulation.

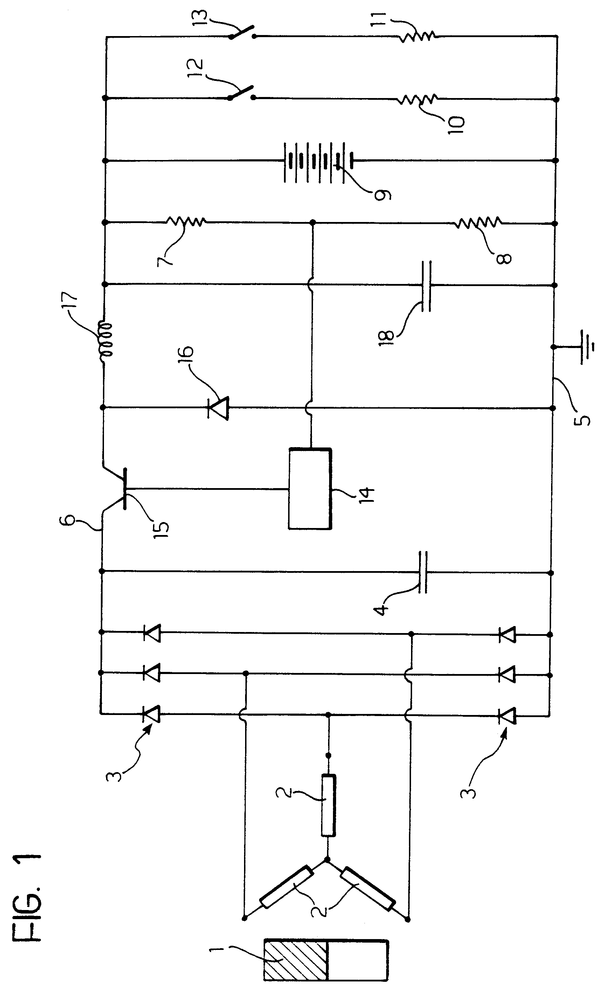

For a better understanding of the present invention, this circuit of the prior art will now be described in greater detail with reference to Figure 1.

Figure 1 shows an alternator constituted by a permanent-magnet inductor 1 and an armature constituted by windings 2. The windings 2 are connected to a three-phase rectifier bridge of which the rectifier elements, indicated 3, are diodes. A capacitor 4, connected to the output of the rectifier bridge between the positive terminal 6 and the negative terminal 5 which, typically, is connected to the earth of the vehicle, has the purpose of smoothing the waveform of the voltage output by the rectifier bridge.

The voltage across the capacitor 4, which is the voltage output from the rectifier bridge, depends on the rate of rotation of the alternator which in turn depends on the rate of rotation of the internal combustion engine of the vehicle. Clearly, therefore, the voltage across the capacitor 4 is variable according to the rate of rotation of the engine and, in many cases, is too high to be applied to the battery 9 of the vehicle. It is therefore necessary to interpose between the rectifier bridge and the battery 9 a voltage regulator, the function of which is to reduce the voltage to a value suitable for the battery 9.

In the known circuit at present under examination, the voltage regulator is constituted by a switching circuit in a configuration known as a step-down configuration. A switch, typically a MOS transistor, with controlled switching, that is, into the cut-off condition or into the fully-conductive (saturated) condition, is connected to the positive pole 6 of the rectifier bridge. A coil 17 is connected to the output of the transistor 15 and is connected in turn to the positive terminal of the battery 9. The cathode of a rectifier diode 16 is also connected to the output of the transistor 15 and its anode is connected to earth.

When the transistor 15 is conducting, a current flows from the positive terminal 6 of the rectifier bridge through the transistor 15 and the coil 17 towards the battery 9 and any users 10, 11 in the vehicle which can be connected or disconnected by means of the corresponding switches 12, 13.

The current supplied also charges a capacitor 18 connected in parallel with the battery 9. At this stage, the current flowing stores energy in the coil 17. When the transistor 15 is cut off, the capacitor 18 maintains the voltage to the battery 9 and the loads 10 and 11 whilst the energy stored in the coil 17 causes current to be recycled from earth 5 through the diode 16.

The transistor 15 is controlled so as to be cut off or made fully conductive (saturated) by a control circuit 14 operating with pulse-amplitude modulation. The control circuit 14 achieves the regulation by detecting the voltage across the capacitor 18 by means of a connection to the intermediate junction of a voltage divider which is constituted by resistances 7 and 8 and is connected in parallel with the capacitor 18 and the battery 9.

Typically, the value detected at the intermediate junction of the voltage divider 7, 8 is compared with a reference voltage generated within the control circuit 14. The switching frequency of the transistor reaches values of about 40 kHz.

The regulator circuit described above has some technical disadvantages.

A first disadvantage is due to the radio-frequency electromagnetic emissions caused by the high frequency at which the transistor 15 is switched (40 kHz). A second disadvantage is due to the complexity of the circuit and to its cost and bulk.

The object of the present invention is to provide a voltage regulator which solves all the problems mentioned above in a satisfactory manner and, in particular, which provides a simpler and less bulky regulator which is completely free of radio-frequency electromagnetic emissions.

According to the present invention, this object is achieved by virtue of a voltage regulator having the characteristics indicated in the claims which follow the present description.

Further advantages and characteristics of the present invention will become clear from the following detailed description which is given with the aid of the appended drawings, provided by way of non-limiting example, in which:
Figure 1 has already been described with reference to the prior art,
Figure 2 is a circuit diagram of an embodiment of the present invention, and
Figure 3 is a cartesian graph illustrating the operation of the present invention.

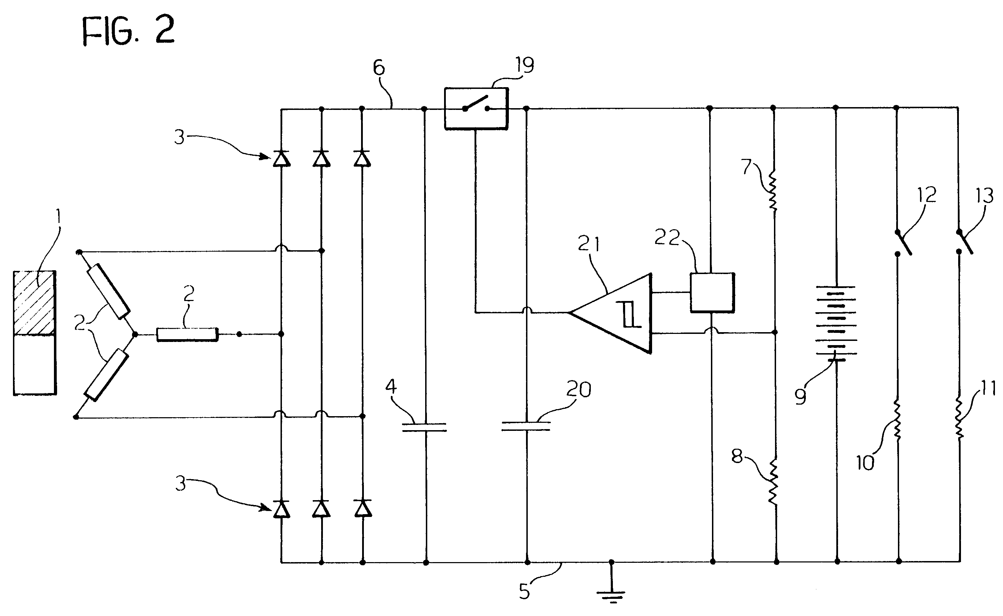

An embodiment of the present invention will now be described with reference to Figure 2. In Figure 2, parts and elements already described with reference to Figure 1 have again been given the same numerical symbols.

A capacitor 4 is connected to the output of the rectifier bridge, between the positive terminal 6 and the earth terminal 5. The capacitor 4 has a capacitance of several hundreds of microfarads and its function is mainly to limit the voltage peaks which occur during the opening of a controlled switch 19 interposed between the positive terminal 6 and the battery 9. The opening and closing of the switch 19 are controlled by a control circuit 21 which is essentially a voltage comparator.

The voltage comparator 21 compares a reference voltage generated in known manner by a reference-voltage generator 22 with a voltage detected at the intermediate junction of a voltage divider which is constituted by the resistances 7 and 8 and is disposed in parallel with the battery 9. In practice, the comparator 21 compares the voltage across the battery 9 with the reference value Vref.

When the voltage across the battery 9 reaches a predetermined minimum value V1 < Vref, the output of the threshold comparator 21 is brought to a condition such that the switch element 19 is made fully conductive. The current can thus flow from the positive terminal 6 towards the battery 9, the loads 10, 11 (if they are connected by means of the switches 12, 13), and the capacitor 20 connected in parallel with the battery 9. The current supplied by the alternator charges the capacitor 20 and the voltage across the battery 9 and the loads 10, 11 starts to increase. The switch 19 remains conductive until the voltage across the battery 9 has risen to a predetermined maximum value V2 > Vref, at which value the output of the threshold comparator 21 ceases to keep the switch 19 conductive, causing it to open.

The capacitor 20 is then discharged into the loads 10, 11 and the voltage across the battery 9 falls until it reaches V1 < Vref; at this point, the cycle bust described starts again.

The regulator thus operates by keeping the voltage across the users 10, 11 and the battery 9 between the minimum and maximum values V1 and V2 which are close to the nominal voltage Vbatt of the battery.

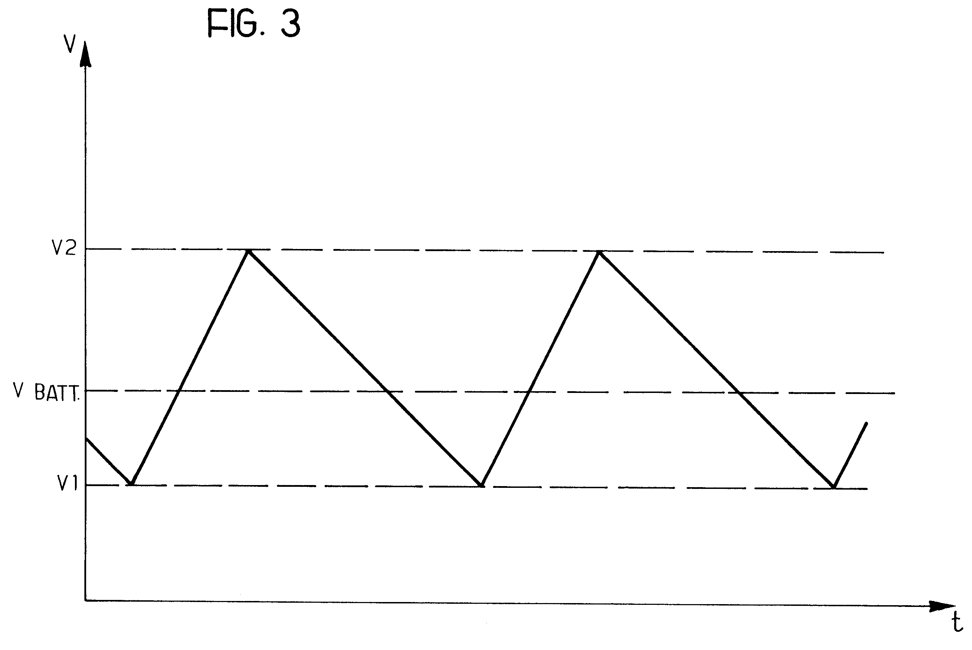

Figure 3 shows, purely by way of indication, the curve of the voltage across the loads 10, 11, the battery 9 and the capacitor 20.

The capacitor 20 is preferably formed with the use of supercapacitor technology: for example, a capacitor with a capacitance of 2 farads and an internal resistance of less than 100 milliohms is used. With such a capacitor and with an absorbtion of 100 amperes by the loads, a switching frequency of the switch 19 of the order of tens of Hz is obtained.

A conventional mechanical switch or a static switch formed by semiconductor technology (MOS transistors) may thus be used equally well for the switch 19.

The voltage regulator according to the present invention is simple and compact and has the considerable advantage that it is free of radio-frequency emissions.

Naturally, the principle of the invention remaining the same, the details of construction and forms of embodiment may be varied widely with respect to those described and illustrated, without thereby departing from the scope of the present invention.

## Claims

1. A voltage regulator, particularly for use in association with an electrical generator (1, 2, 3) supplying a direct current in a vehicle with a combustion engine, characterized in that it comprises, in operative combination:
- switching means (19) for selectively enabling and preventing the flow of current between the electrical generator and current-user means (10, 11);
- capacitor means (20) connected in parallel with the current-user means (10, 11),
- voltage comparison means (21) operatively connected to the switching means (19) for comparing the voltage across the capacitor means (20) with a reference value (Vref) and controlling the conduction and cutting-off of the switching means (19) so as to keep the voltage across the capacitor means (20) within a predetermined range of values (V1, V2).

2. A regulator according to Claim 1, characterized in that the switching means (19) comprise electromechanical switch means.

3. A regulator according to Claim 1, characterized in that the switching means (19) comprise semiconductor switching means.

4. A device according to Claim 3, characterized in that the semiconductor switching means comprise at least one MOS transistor.

5. A regulator according to any one of Claims 1 to 4, characterized in that it comprises further capacitor means (4) connected in parallel with output terminals (5, 6) of the electrical generator (1, 2, 3).

6. A regulator according to Claim 5, characterized in that the further capacitor means comprise a capacitor (4) having a capacitance of the order of hundreds of microfarads.

7. A regulator according to Claim 1, characterized in that the capacitor means comprise a capacitor (20) formed with the use of technology known as supercapacitor technology.

8. A regulator according to Claim 1 or Claim 7, characterized in that the capacitor means (20) have a capacitance greater than one farad.

9. A regulator according to any one of the preceding claims, characterized in that the reference value (Vref) is generated by reference-voltage generator means (22) operatively connected to a first input of the voltage-comparison means (21).

10. A regulator according to any one of the preceding claims, characterized in that it comprises voltage-divider means (7, 8) connected in parallel with the capacitor means (20), the voltage at an intermediate terminal of the voltage-divider means (7, 8) being indicative of the voltage across the capacitor means (20), the intermediate terminal being connected to a second input of the voltage-comparison means (21).

11. A regulator according to any one of the preceding claims, characterized in that the voltage-comparison means (21) can:
- make the switching means (19) conductive when the voltage across the capacitor means (20) reaches a first predetermined voltage value (V1),
- cut off the switching means (19) when the voltage across the capacitor means (20) reaches a second predetermined voltage value (V2) greater than the first predetermined voltage value (V1).

12. A regulator according to any one of Claims 1 to 10, characterized in that, the vehicle comprising a voltage source (9) connected in parallel with the current-user means (10, 11), the reference value (Vref) is selected so that the voltage across the voltage source (9) is kept near the nominal voltage (Vbatt) of the voltage source (9).

13. A regulator according to Claims 11 and 12, characterized in that the first and second predetermined voltage values (V1, V2) are selected so as to keep the voltage across the voltage source (9) near to the nominal voltage (Vbatt).

14. A regulator according to Claims 11 to 13, characterized in that the first predetermined voltage value (V1) is lower than the nominal voltage (Vbatt) and the second predetermined voltage value (V2) is higher than the nominal voltage (Vbatt).

15. A regulator according to any one of the preceding claims, characterized in that the voltage-comparison means (21) comprise a voltage comparator.

16. A regulator according to any one of the preceding claims, characterized in that the voltage source (9) comprises a battery and in that the nominal voltage is the nominal voltage (Vbatt) of the battery.

17. A regulator according to any one of the preceding claims, characterized in that the capacitance of the capacitor means (20) and the voltage range given by the difference between the first and second predetermined voltage values (V1, V2) are selected so that the switching frequency of the switching means (19) in use is of the order of tens of Hz.
